(19) **Europäisches Patentamt / European Patent Office / Office européen des brevets**

(11) **EP 1 711 553 B1**

(12) **EUROPEAN PATENT SPECIFICATION**

(45) Date of publication and mention
of the grant of the patent:
**05.09.2007 Bulletin 2007/36**

(51) Int Cl.:
**C08J 5/12** (2006.01)

(21) Application number: **05712479.4**

(22) Date of filing: **27.01.2005**

(86) International application number:
**PCT/US2005/003049**

(87) International publication number:
**WO 2005/078009 (25.08.2005 Gazette 2005/34)**

(54) **SUBSTRATES CONATINING ADHESION PROMOTING ADDITIVES AND ARTICLES PREPARED THEREWITH**

HAFTVERMITTELNDE ADDITIVE ENTHALTENDE SUBSTRATE UND DAMIT HERGESTELLTE GEGENSTÄNDE

SUBSTRATS CONTENANT DES ADHESIFS AMELIORANT L'ADHERENCE ET ARTICLES OBTENUS AU MOYEN DESDITS ADHESIFS

(84) Designated Contracting States:
**CH DE ES FR GB IT LI**

(30) Priority: **06.02.2004 US 542811 P**

(43) Date of publication of application:
**18.10.2006 Bulletin 2006/42**

(73) Proprietor: **INVISTA Technologies S.à.r.l.
8001 Zürich (CH)**

(72) Inventors:
• **MARTIN, Kenneth, E.
Newark, DE 19711 (US)**

• **IQBAL, Tahir
Colonial Heights,
VA 23834 (US)**
• **HE, Qiwei
Belle Mead, NJ 08502 (US)**
• **HARWELL, Michael, G.
Hillsborough, NJ 08844 (US)**

(74) Representative: **Cockerton, Bruce Roger et al
Carpmaels & Ransford,
43-45 Bloomsbury Square
London WC1A 2RA (GB)**

(56) References cited:
**EP-A- 0 982 337        WO-A-01/68780
US-A- 5 976 652**

**Description**

FIELD OF THE INVENTION

The present invention relates to adhesion enhancing additives and, more particularly, to substrates, for example polymeric substrates, containing such additives and to manufactured articles comprising such substrates.

BACKGROUND OF THE INVENTION

Adhesives are generally used to join together the different parts of manufactured articles and are widely used for various commercial and industrial applications such as product assembly and packaging.
Hot melt adhesives are used in the construction of disposable absorbent articles, such as diapers and the like, including those comprising elastic components such as waist bands and leg cuffs. Such hot melt adhesives are applied to the substrate while in a molten state and then cooled to harden the adhesive, for example to join together the different parts of a manufactured article. Use of hot melt adhesives allow for cost and time efficient manufacturing since there is no evaporation step necessary as is the case for water-based or solvent-based adhesive systems. Hot melts are also generally used in case and carton sealing applications.
In other manufacturing areas, such as in bottle labeling applications, core and tube winding and the like, a waterborne or other solvent-based adhesive may be the preferred choice. In still other manufacturing areas, such as in the building and automotive industries, a reactive polyurethane hot melt adhesive may be preferred for use.
The type of adhesive used depends to a large extent upon the use to which the substrate will be subjected, as well as the nature of the substrate material or materials. Adhesives may be selected and/or formulated for use with particular substrates, such as paper, paperboard, fabrics such as knits, wovens, and nonwovens, wood, wood composites, and polymers including those in the form of elastomeric substrates (*e.g.*, spandex) and/or for resistance to environmental factors such as heat or moisture.
There continues to be a need for substrates modified to promote better adhesion when an adhesive is used to bond the substrate to another substrate. The current invention fills this need.

SUMMARY OF THE INVENTION

The present invention provides in one aspect a method of enhancing the adhesion of an adhesive, such as for example a hot melt adhesive, to a substrate, such as a polymeric substrate, comprising incorporating into the substrate an adhesion-enhancing amount of an additive selected from the group consisting of polyethers such as poly(ethylene oxide), poly(propylene oxide), poly(trimethylene oxide), poly(tetramethylene oxide), and copolymers containing a carboxylic acid functional group such as; copolymers of acrylic acid, copolymers of methacrylic acid, and copolymers of itaconic acid, and mixtures thereof. The invention further provides in another aspect a substrate, for example a polymeric substrate, preferably spandex, comprising an adhesion enhancing amount, preferably about 1.5 to about 5 wt%, of such an additive.
The invention also provides in a further aspect a process for bonding a first substrate to at least a second substrate comprising applying to at least the first substrate an adhesive, preferable a hot melt adhesive, and bringing at least the second substrate in contact with the adhesive present on the first substrate, wherein at least one of said first and said second substrate comprises an adhesion enhancing amount of such an additive. The invention further provides in yet another aspect an article of manufacture, preferably a disposable absorbent article, comprising such a substrate made by such a process.

DETAILED DESCRIPTION OF THE INVENTION

All documents cited herein are incorporated in their entireties by reference.
It has now been discovered that the adhesion of a first substrate to a second substrate with a an adhesive can be improved by a method comprising the step of incorporating into at least one of the substrates an adhesion enhancing amount of an additive selected from the group consisting of polyethers (for example poly(ethylene oxide), poly(propylene oxide), poly(trimethylene oxide), and/or poly(tetramethylene oxide)) and copolymers containing a carboxylic acid functional group (for example copolymers of acrylic acid, methacrylic acid, and/or itaconic acid), optionally partially neutralized with a metal ion (for example $Na^+$, $Li^+$, and/or $K^+$). Preferred for use as an adhesion promoting additive are poly(ethylene oxide) (PEO), acrylic acid (AA) copolymers, and/or methacrylic acid (MAA) copolymers. Examples include ISOCRYL® C-72, an acrylic solid resin and Epomatt® G152, a poly(methyl methacrylate-co-methacrylic acid) resin (both available from Estron Chemical, Inc.) and Elvacite® 2669, a poly(methyl methacrylate-co-ethyl acrylate-co-methacrylic acid) with acid number of 124, having a number-average molecular weight of about 60,000 and a Tg of 70°C (available from Lucite International). The carboxylic acid-functional copolymer and the poly(ethylene oxide) can have number average molecular weights of about 5,000 to 150,000. In one embodiment the additive is poly(ethylene oxide) having an number average molecular weight of about 10,000.

The means of incorporating the adhesion promoting additive is not limiting and the additive can be incorporated into the substrate through any conventional means. For example, in the case of a polymeric substrate mixing the additive with the polymer solution prior to spinning to form a substrate fiber.

Determination of what constitutes an adhesion enhancing amount of an additive can be made by the skilled practitioner using standard and routine testing procedures. In general, any amount that, when added to the substrate improves the bonding performance of an adhesive used to bond the substrate to another substrate in comparison to bonding performance in the absence of the additive, is considered an adhesion enhancing amount.

In one embodiment adhesion enhancing amount means that the creep performance of the substrate, for example a polymeric substrate, when bonded to a nonwoven substrate with an adhesive, for example a hot melt adhesive, is better than the creep performance of a control substrate lacking the additive. In another embodiment, the creep performance of the substrate is improved by at least about 10% relative, compared to the creep performance of a control substrate lacking the additive. For example, the additive can be present at about 1.5 to about 5 weight percent, preferably 2 to 3 weight percent, based on the weight of the substrate.

The invention also provides a substrate comprising an adhesion enhancing amount of an adhesion enhancing additive. Non-limiting examples of substrates include paper, cloth, wood and wood composites, vinyl, concrete, and the like. In one preferred embodiment, the substrate comprising the additive is an elastomeric fiber, for example spandex. In another embodiment, the substrate is a nonwoven fabric.

At least one of the substrates can be a polyurethane (including a polyurethane urea), for example a polyester urethane or a polyether urethane, a polyetherester, a polyesteramide, a polyetheresteramide, a polyetheramide, or a polyester (for example poly(ethylene terephthalate), poly(trimethylene terephthalate), or poly(tetramethylene terephthalate)). The substrate can be in the form of a shaped article, for example a fiber, a tape or strip, a film, or a molded article. A preferred polymeric substrate is spandex, which as used herein means a manufactured fiber in which the fiber-forming substance is a long-chain synthetic polymer comprised of at least 85 percent by weight of a segmented polyurethane. A non-limiting example of spandex is Lycra® spandex and Lycra® XA®, a spandex having little or no lubricating finish thereon. Lycra® spandex is known to exhibit nearly ideal, temperature independent elastic properties rendering it very suitable for use in garments, sports apparel and swimsuits.

The incorporation of the adhesion promoter additive into a polymeric substrate can be accomplished by various means. For example, when the substrate is to be processed in solution (for instance by wet- or dry-spinning into fiber or by solution-coating or -casting into film), the additive can be incorporated as a slurry or solution in a solvent for the substrate. When the substrate is to be processed in the melt, the additive can be incorporated as a masterbatch or by precision dosing, for example into a mixing extruder or heavy duty bladed mixer.

In another embodiment, the invention is directed to a substrate comprising an adhesion enhancing amount of an additive. Examples of such additives have been described elsewhere herein and include for example additives selected from the group consisting of poly(ethylene oxide), poly(propylene oxide), poly(trimethylene oxide), poly(tetramethylene oxide), copolymers of acrylic acid, copolymers of methacrylic acid, copolymers of itaconic acid, and mixtures thereof. Preferred are substrates comprising an additive selected from the group consisting of poly(ethylene oxide), copolymers of acrylic acid, and copolymers of methacrylic acid. Substrates further comprising a hot melt adhesive disposed on the surface thereof are more preferred, and substrates comprising such a hot melt adhesive comprising a thermoplastic elastomer, a tackifying resin and an ionomer resin are still more preferred. Even more preferred are such substrates comprising such a hot melt adhesive wherein the metal cation present in the ionomer resin is polyvalent, for example $Ca^{++}$, $Mg^{++}$, $Zn^{++}$, $Ba^{++}$ or $Al^{+++}$. Such substrates having such an adhesive disposed thereon wherein the cation in the ionomer resin is $Zn^{++}$ are preferred.

In another embodiment, the invention provides a process for bonding a first substrate to a second substrate by steps comprising applying to at least the first substrate an adhesive, for example a hot melt adhesive, and bringing at least the second substrate in contact with the adhesive present on the first substrate, wherein at least one of the first and second substrates comprise an adhesion-enhancing amount of an adhesion promoting additive or mixture of such additives. Examples of such additives have been described herein and include additives selected from the group consisting of polyethers and copolymers containing a carboxylic acid functional group, and mixtures thereof. Examples of suitable polyethers and carboxylic acid copolymers are provided elsewhere herein, as are preferred embodiments of the substrates and adhesives.

The substrates may be similar or dissimilar. In another embodiment, the first and second substrates are the same. In one embodiment, the first substrate is bonded to itself and therefore comprises both the first and second substrate. In one embodiment at least one of the first and second substrates is polymeric. In a particularly preferred embodiment, at least one substrate is an elastomeric polyurethane fiber (spandex) and the adhesive comprises a hot melt adhesive, more preferably a low application temperature hot melt adhesive (*i.e.*, an adhesive that can be applied at temperatures between from about 200 (93 °C) to about 300°F (149°C)), even more preferably a low application temperature hot melt adhesive comprising a thermoplastic elastomer, a tackifying resin and an ionomer resin.

Yet another embodiment of the invention is an article of manufacture comprising at least one substrate comprising an adhesion-enhancing amount of adhesion promoting additive or mixture of such additives. Examples of such additives have been disclosed elsewhere herein. Articles of manufacture include but are not limited to outerwear, undergarments, sports apparel, automotive trim, weather-stripping, gaskets, furniture, upholstery, packaging, books, labels, wall coverings, floor coverings, cores and tubes for commercial and industrial uses, and disposable absorbent garments such as, for example, diapers for use by infants and toddlers, adult incontinent pads, and feminine hygiene products.

Articles of the invention comprise an additive containing substrate and an adhesive. The type of adhesive used is limited only by the end use and/or environmental conditions encountered during the manufacture, storage or use of the article, and include hot melt adhesives, moisture curable reactive polyurethanes, waterborne adhesives, as well as other solvent borne adhesives.

In one embodiment of the article of manufacture, the substrate that contains the additive is an elastomeric fiber, tape, film, strip, coating, ribbon, and/or sheet, for example Lycra® spandex, Lycra® XA (a spandex having little or no lubricating finish thereon), melt spun elastomers such as polyetheresters and elastomeric polyolefins, or natural or synthetic rubbers in the form of fibers or strips less than about 10 mm wide. The elastomeric substrate can be present in at least one component of the article of manufacture. Non-limiting examples of such components include waistbands, leg bands, bellybands, etc.

A preferred article comprising a substrate comprising an adhesion-enhancing amount of adhesion promoting additive or mixture of such additives is a disposable absorbent product, for example a diaper, training pant, adult incontinent product, or sanitary napkin. Such an article can comprise (1) a liquid-permeable topsheet, (2) a liquid-impermeable backsheet which may be attached to the topsheet, (3) an absorbent structure positioned between the topsheet and the backsheet, and (4) an adhesive. The article of manufacture may also, desirably, comprise an elastic fiber such as spandex, an elastomeric tape or strip, and the like.

Materials suitable for use as a topsheet can typically be spunbonded polypropylene or polyethylene having a basis weight of from about 15 to about 25 grams per square meter.

Backsheets are generally capable of containing liquids such as water, urine, menses, or blood, within the absorbent core of the disposable absorbent product. Examples include polyolefin films which can be 'breathable', e.g. polypropylene or polyethylene made microporous by incorporating a filler and then stretching.

An absorbent structure typically comprises a nonwoven fabric, which can be defined as an interlocking fiber network characterized by flexibility, porosity and integrity in which the fibers can be synthetic, naturally occurring, or a mixture of the two. The fibers can be mechanically, chemically, or thermally bonded to each other, for example by spun bonding, melt blowing, or hydroentangling. Manufactured articles comprising first and second substrates one of which is a nonwoven can also be used in other applications including insulation, packaging (*e.g.*, for foods such as meat), household wipes, surgical drapes, and medical dressings, and such articles are also within the scope of the present invention.

The adhesive used in the various embodiments of the present invention may be formulated for use as a positioning adhesive, core adhesive or elastic adhesive, and can be particularly suitable for use in the manufacture of articles such as disposable absorbent products (including diapers, adult incontinent products, training pants, bed pads, sanitary napkins, bibs, wound dressings, and surgical capes or drapes). The adhesive may be used to adhere a nonwoven or (optionally cellulosic) tissue to another substrate or component such as another nonwoven, tissue, an elastomeric fiber, strip, or tape, and the like. The adhesive may be used to attach the topsheet to the backsheet. Alternatively, the adhesive may be used to adhere either the topsheet or the backsheet to other components of the disposable absorbent product, such as tissue layers, leg flaps, fastening ears, elastomeric fibers, tapes, tabs, or other components typically used to construct a disposable absorbent product that are well known to one skilled in the art.

Durable, preferably elastic, articles such as, for example, automotive door and window trim, clothing waistband threads or strips, and building weather-stripping can be made by well-known molding, thermoforming and profile extrusion technologies.

Substrates with excellent stretch and recovery properties are often needed to manufacture a variety of such disposable and durable articles in order to provide good fit for a wearer, providing seals to retain liquids, or to accommodate an article's frame. Such substrates can include fibers such as spandex, elastomeric polyolefins, melt-spun elastomers, and the like, which can be prepared by well known processes such as melt- and solution-spinning and optionally winding. Elastomeric polymer film and sheet substrates can be made by processes such as extrusion and coextrusion techniques, *e.g.*, blown film, cast film, profile extrusion, injection molding, extrusion coating, and extrusion sheeting.

A polymer substrate can be considered elastomeric when it is characterized as having a high percent elastic recovery (*i.e.*, a low percent permanent set) after application of an applied force. Thus, an elastomeric polymer is typically a polymer which, free of diluents, has a break elongation in excess of 100% independent of any crimp (when in fiber form) and which when stretched to twice its length, held for one minute, and then released, retracts to less than 1.5 times its original length within one minute of being released. Such polymers include, but are not limited to: natural rubber or synthetic rubbers; segmented polyurethanes, such as polyetherurethanes and polyesterurethanes; polyetheresters, such as for example Hytrel® from DuPont; elastomeric polyolefins, such as for example elastomeric polypropylene; and elastomeric polyethylene, such as for example XLA fibers from Dow; and elastomeric polyamides, such as polyesteramides, polyetheresteramides, and polyetheramides, such as for example Pebax® from Atofina.

Segmented polyurethanes can be prepared from a polymeric glycol, a diisocyanate, and a chain extender. Polyether glycols, polyester glycols, and polycarbonate glycols are examples of polymeric glycols. Useful polyether glycols include, for example, poly(tetramethylene ether) glycol, poly(tetramethylene ether-co-2-methyl-tetramethylene ether) glycol, poly(trimethylene ether) glycol, poly(tetramethylene ether-co-2,3-dimethyl-tetramethylene ether) glycol, and the like. Useful polyester glycols include poly-ε-caprolactone diol and hydroxy-terminated reaction products of diols such as ethylene glycol, 1,3-propane diol, 1,4-butane diol, 2,2-dimethyl-1,3-propane diol, 3-methyl-1,5-pentane diol, and mixtures thereof with dicarboxylic acids such as adipic acid, and 1,12-dodecanedioic acid, and the like. Useful polycarbonate glycols include poly(pentane-1,5-carbonate) diol, poly(hexane-1,6-carbonate) diol, and the like. Useful diisocyanates include 4-methyl-1,3-phenylene diisocyanate, 1-isocyanato-4-[(4-isocyanatophenyl)methyl]benzene, mixtures of 1-isocyanato-4-[(4-isocyanatophenyl)methyl]benzene and 1-isocyanato-2-[(4-isocyanatophenyl)methyl]benzene, 5-isocyanato-1-(isocyanatomethyl)-1,3,3-trimethylcyclohexane, 1,1'-methylenebis(4-isocyanatocyclohexane), 2,4-diisocyanato-1-methylcyclohexane, 2,6-diisocyanato-1-methylcyclohexane, 1,4-diisocyanatocyclohexane, mixtures thereof, and the like. Useful diamine chain extenders include ethylene diamine, 1,2-propane diamine, 1,3-propane diamine, 1,6-hexamethylene diamine, N-methylbis(3-aminopropyl)amine, 1,4-cyclohexanediamine, 1,3-cyclohexanediamine, 2-methyl-1,5-pentanediamine, 1,3-pentanediamine, mixtures thereof, and the like. Suitable low molecular weight diol chain extenders include ethylene glycol, 1,3-propane diol, 1,2-propane diol, 2,2-dimethyl-1,3-propane diol, 1,4-butane diol, 3-methyl-1,5-pentane diol, 1,4-bis(β-hydroxyethoxy)benzene, mixtures thereof, and the like. Small amounts of monofunctional or tri- or higher-functionality ingredients can also be used, for example diethylamine, diethylenetriamine, diisopropyl amine, butylmethyl amine, isobutylmethyl amine, di-n-butyl amine, ethanol, propanol, butanol, hexanol, n-pentylamine, n-hexylamine, cyclohexylamine, methylcyclohexylamines, and mixtures thereof.

Elastomeric polyetheresters can be prepared by reaction of a) polyether glycols such as for example poly (ethyleneether) glycol, poly(propylene ether) glycol, poly(ethylene-co-propylene ether) glycol, poly(trimethylene ether) glycol, poly(tetramethylene ether) glycol, and poly(tetramethylene ether-co-2-methyl-tetramethylene ether) glycol, b) diols such as ethylene glycol, 1,2-propylene glycol, 1,3-trimethylene glycol, 1,4-butanediol, 2,2-dimethyl-1,3-propane diol, and 3-methyl-1,5-pentane diol, and c) dibasic acids such as terephthalic acid and adipic acid.

Useful elastomeric polyesteramides include those described in U.S. Patent No. 3,468,975. For example, such elastomers can be prepared with polyester segments made by the reaction of ethylene glycol, 1,2-propanediol, 1,3-propanediol, 1,4-butanediol, 2,2-dimethyl-1,3-propanediol, 1,6-hexanediol, 1,10-decanediol, 1,4-di(methylol)cyclohexane, or diethylene glycol, with malonic acid, succinic acid, glutaric acid, adipic acid, methyladipic acid, pimelic acid, suberic acid, azelaic acid, sebacic acid, or dodecanedioic acid, or esters thereof. Examples of polyamide segments in such polyesteramides include those prepared by the reaction of hexamethylene diamine or dodecamethylene diamine with terephthalic acid, oxalic acid, adipic acid, or sebacic acid, and by the ring-opening polymerization of caprolactam.

Useful polyetheresteramide elastomers, such as those described in U.S. Patent No. 4,230,838, can also be used. Such elastomers can be prepared, for example, by preparing a dicarboxylic acid-terminated polyamide prepolymer from a low molecular weight (for example, about 300 to about 15,000) polycaprolactam, poly(hexamethylene adipamide), poly(hexamethylene azelamide), poly(hexamethylene sebacamide), poly(hexamethylene dodecanediamide), or the like and succinic acid, adipic acid, sebacic acid, terephthalic acid, dodecanedioic acid, or the like. The prepolymer can then be reacted with an hydroxy-terminated polyether, for example poly(tetramethylene ether) glycol, poly(tetramethylene-co-2-methyltetramethylene ether) glycol, poly(propylene ether) glycol, poly(ethylene ether) glycol, poly(trimethylene ether) glycol, or the like.

Any conventional adhesive can be used in the various embodiments of the invention; hot melt adhesives are preferred. When the polymeric substrate is elastomeric, it is preferred that such adhesives be suitable as elastic attachment adhesives. Any base polymer suitable for use in formulating such adhesives, as are well known to those skilled in the art, can be used in the practice of the invention. Such base polymers include amorphous polyolefins, ethylene-containing polymers and rubbery block copolymers, as well as mixtures thereof.

Amorphous polyolefin base polymers can be made by the stereospecific polymerization of polypropylene. Suitable commercial products include Eastman's P 1010. Copolymers of amorphous polypropylene and ethylene, amorphous polypropylene and butene and amorphous polypropylene and hexene are suitable, as are terpolymers of propylene, butene and ethylene. Commercial examples include Rextac 2315 (copolymer of amorphous polypropylene and ethylene) available from Rexene, Rextac 2730 (copolymer of amorphous polypropylene and butene) also available from Rexene and Vestoplast 750 and 708 (terpolymers of amorphous propylene, butene and ethylene) available from Huls.

Ethylene-containing base polymers can comprise at least one ethylene copolymer; and can comprise a blend of two or more polymers. The term ethylene copolymer, as used herein, refers to homopolymers, copolymers and terpolymers of ethylene. Examples of ethylene copolymers include copolymers with one or more polar monomers such as vinyl acetate or other vinyl esters of monocarboxylic acids, and acrylic or methacrylic acid and their esters with methanol, ethanol or other alcohols. Examples include poly(ethylene-co-vinyl acetate), poly(ethylene-co-methyl acrylate), poly(ethylene-co-n-butyl acrylate), poly(ethylene-co-acrylic acid), poly(ethylene-co-methyl methacrylate), and mixtures thereof.

Rubbery block base copolymers include block and multi-block copolymers having the general configuration A-B-A or A-B-A-B-A-B- wherein the polymer blocks A are non-elastomeric polymer blocks which, as homopolymers have glass transition temperatures above 20°C, while the elastomeric polymer blocks B can be, for example, polybutadiene, polyisoprene, or poly(butadiene-co-isoprene). The non-elastomeric blocks can comprise homopolymers or copolymers of vinyl monomers such as vinyl arenes, vinyl pyridines, vinyl halides and vinyl carboxylates; acrylic monomers such as acrylonitrile, methacrylonitrile, and esters of acrylic acids; monovinyl aromatic hydrocarbons such as styrene, vinyl toluene, vinyl xylene, and ethyl vinyl benzene; and dicyclic monovinyl compounds such as vinyl naphthalene; and the like. Other non-elastomeric polymer blocks can be derived from alpha olefins, alkylene oxides, acetals, urethanes, and so on.

The elastomeric block component B of the rubbery block base copolymer can be isoprene or butadiene which may or may not be hydrogenated. Such components can be linear or branched, for example forming an elastomeric portion in which at least three branches radiate out from a central hub or can otherwise be coupled together. Hydrogenation can be either partial or substantially complete, the hydrogenation conditions being selected so as to hydrogenate the elastomeric block but not the non-elastomeric blocks, or selected so as to hydrogenate both the elastomeric and non-elastomeric blocks to substantially the same extent.

Typical rubbery block copolymers include polystyrene-polybutadiene-polystyrene, polystyrene-polyisoprene-polystyrene and e.g., polystyrene-poly-(ethylenebutylene)-polystyrene and polystyrene-poly-(ethylenepropylene)-polystyrene. These copolymers may be prepared using methods taught, for example, in U.S. Patent Nos. 3,239,478; 3,427,269; 3,700,633; 3,753,936; and 3,932,327. Alternatively, they may be obtained from Kraton Chemical Co. under the trademarks Kraton 1101, 1102, 1107, 1650, 1652 and 1657; from Enichem under the Europrene Sol-T tradenames; and from Firestone under the tradename Stereon 840A. Adhesives based on rubbery block copolymers are described in U.S. Patent Nos. 4,526,577, 4,944,993, 5,603,948 and others.

Other base polymers can include isotactic polypropylene, atactic polypropylene, styrene-butadiene, styrene-isoprene, and styrene-ethylenebutylene A-B-A or A-B-A-B block copolymers or mixtures thereof.

Mixtures of any of such base polymers, such as mixtures of poly(ethylene-co-n-butyl acrylate) with poly(ethylene-co-vinyl acetate) and poly(ethylene-co-vinyl acetate) with atactic polypropylene can also be used to prepare hot melt adhesive compositions. In all cases, the adhesives may be formulated with tackifying resins, oils, plasticizers, and waxes, as well as conventional additives such as anti-oxidants, pigments, and the like.

Low application temperature hot melt adhesives are preferred in the embodiments of the present invention, that is, adhesives that can be applied at temperatures below about 300°F (149 °C), preferably at about 200°F to 290°F (93 °C to 143 °C). In one embodiment the adhesives can be applied at a temperature from about 250 (121 °C) to about 290°F (143 °C), preferably about 255°F (124 °C) to about 280°F (138 °C). Low application temperature hot melt adhesives are commercially available from National Starch and Chemical Company, Bridgewater, NJ.

A hot melt adhesive comprising about 0.5 to 55 wt % of a thermoplastic elastomer (for example a "base polymer" described elsewhere herein), about 30 to 90 wt % of a tackifying resin, and about 0.1 to 40 wt % of an ionomer resin is particularly useful in the embodiments of the present invention. Such an adhesive preferably further comprises up to about 40 wt % of a diluent and up to about 25 wt % of a wax.

Useful ionomer resins include polymers or copolymers of compounds that contain carboxylate, sulphonate or phosphonate that is at least partially neutralized by $Na^+$, $Li^+$, $K^+$, $Ca^{++}$, $Mg^{++}$, $Zn^{++}$, $Ba^{++}$ or $Al^{+++}$ or other metallic ions. Preferred are ionomer resins wherein the metal cation is polyvalent, for example $Ca^{++}$, $Mg^{++}$, $Zn^{++}$, $Ba^{++}$ or $Al^{+++}$. $Zn^{++}$ is more preferred. The percentage of the ionic content in the copolymer can be varied and the percentage of neutralization can also be varied. Suitable commercially available ionomers include, for example, ACLyn® from Honeywell, Surlyn® from DuPont, and Escor® and Iotek® from ExxonMobil, which are at least partly neutralized copolymers of ethylene and acrylic acid or methacrylic acid, and Hycar® from B. F. Goodrich, a butadiene-styrene-acrylic acid terpolymer. Useful ionomers include perfluorinated ionomers. Such ionomers are commercially available. Examples include DuPont's Nafion®, and Asahi Glass Company's Flemion®.

Hot melt adhesives may be prepared using techniques known in the art. Typically, the adhesive compositions are prepared by blending the components in the melt at a temperature of about 100° to 200°C until a homogeneous blend is obtained, approximately two hours. Various methods of blending are known and any method that produces a homogeneous blend is satisfactory.

Tackifying resins useful in the low temperature adhesives that can be used in the present invention include hydrocarbon resins, synthetic polyterpenes, rosin esters, natural terpenes, and the like. More particularly, and depending upon the particular base polymer, the useful tackifying resins may include any compatible resins or mixtures thereof such as natural and modified rosins including, for example, as gum rosin, wood rosin, tall oil rosin, distilled rosin, hydrogenated rosin, dimerized rosin, and polymerized rosin; glycerol and pentaerythritol esters of natural and modified rosins, including, for example as the glycerol ester of pale, wood rosin, the glycerol ester of hydrogenated rosin, the glycerol ester of polymerized rosin, the pentaerythritol ester of hydrogenated rosin, and the phenolic-modified pentaerythritol ester of rosin; copolymers and terpolymers of natured terpenes, including, for example, styrene/terpene and alpha methyl styrene/terpene; polyterpene resins having a softening point, as determined by ASTM method E28-58T, of from about 80°C to 150°C; phenolic modified terpene resins and hydrogenated derivatives thereof including, for example, the resin product resulting from the condensation, in an acidic medium, of a bicyclic terpene and a phenol; aliphatic petroleum hydrocarbon resins having a Ball and Ring softening point of from about 70°C to 135°C; aromatic petroleum hydrocarbon resins and the hydrogenated derivatives thereof; and alicyclic petroleum hydrocarbon resins and the hydrogenated derivatives thereof. Mixtures of two or more of the above described tackifying resins may be required for some formulations.

Various plasticizing or extending oils may also present in the composition in amounts of 5% to about 30%, preferably 5 to 25%, by weight in order to provide wetting action and/or viscosity control. Even higher levels may be used in cases where block copolymer containing hydrogenated mid-block are employed as the adhesive base polymer. The above broadly includes not only the usual plasticizing oils but also contemplates the use of olefin oligomers and low molecular weight polymers as well as vegetable and animal oil and their derivatives. The petroleum derived oils which may be employed are relatively high boiling materials containing only a minor proportion of aromatic hydrocarbons (preferably less than 30% and, more particularly, less than 15% by weight of the oil). Alternatively, the oil may be totally non-aromatic. The oligomers may be polypropylenes, polybutenes, hydrogenated polyisoprene, hydrogenated polybutadiene, or the like having average molecular weights between about 350 and about 10,000. Vegetable and animal oils include glyceryl esters of the usual fatty acids and polymerization products thereof.

Various petroleum derived waxes may also be used in amounts less than about 15% by weight of the composition in order to impart fluidity in the molten condition of the adhesive and flexibility to the set adhesive, and to serve as a wetting agent for bonding cellulosic fibers. The term "petroleum derived wax" includes both paraffin and microcrystalline waxes having melting points within the range of 130°F to 225°F (54 °C to 107 °C) as well as synthetic waxes such as low molecular weight polyethylene or Fisher-Tropsch waxes.

An antioxidant or stabilizer may also be included in the adhesive compositions described herein in amounts of up to about 3% by weight. Among the applicable antioxidants or stabilizers are high molecular weight hindered phenols and multifunctional phenols such as sulfur and phosphorous-containing phenols. Representative hindered phenols include: 1,3,5-trimethyl 2,4,6-tris (3,5-di-tert-butyl-4-hydroxy-benzyl)benzene; pentaerythritol tetrakis-3(3,5-di-tert-butyl-4-hydroxyphenyl)-propionate; n-octadecyl-3,5-di-tert-butyl-4-hydroxyphenol)-propionate; 4,4'-methylenebis (2,6-tert-butylphenol); 4,4'-thiobis (6-tert-butyl-o-cresol); 2,6-di-tertbutylphenol; 6-(4-hydroxyphenoxy)-2,4-bis(n-octyl-thio)-1,3,5-triazine; di-n-octadecyl 3,5-di-tert-butyl-4-hydroxy-benzyl-phosphonate; 2n-octylthio)-ethyl 3,5-di-tert-butyl-4hydroxy-benzoate and sorbitol hexa[3-(3,5-ditert-butyl-4-hydroxyphenyl)-propionate].

Other additives conventionally used in hot melt adhesives to satisfy different properties and meet specific application requirements also may be added to the adhesive composition of this invention. Such additives include, for example, fillers, pigments, flow modifiers, dyestuffs, which may be incorporated in minor or larger amounts into the adhesive formulation, depending on the purpose.

The invention is further illustrated by the following examples, which, while they describe bonding an elastomeric substrate to a nonwoven substrate using a hot melt adhesive, are not to be construed as limiting the invention thereto.

EXAMPLES

In the following examples, all parts are by weight and all temperatures in degrees Fahrenheit unless otherwise noted.

Adhesive preparation. All the adhesive formulations described herein were prepared in a 600 g Brabender mixer with sigma blades. The thermoplastic elastomers and about 20% of the oil in the formulation were added to the bowl, which was preheated to about 325°F (163 °C), and blended until a homogenous mixture was obtained. The ionomer was added and blended in to homogeneity, and then a mid-block tackifying resin was added and blended to homogeneity. Finally, the remainder of the oil and the end block tackifying resin were added. The blending process was terminated when the mixture was homogeneous.

The following materials were used in the preparation of the adhesives in accordance with the present invention:

Vector® 4411 and Vector® 4211 are tri-block thermoplastic elastomer copolymers of styrene and isoprene with isoprene as soft mid-block and are products from ExxonMoble Chemical Company. Vector® 4411 has around 44wt% styrene and a melt flow index around 30-50 grams per 10 minutes, and Vector® 4211 is derived from about 30wt% styrene and has a melt flow index of about 11-15 grams per 10 minutes.

Vector® DPX 552, a thermoplastic elastomer which is a radial copolymer of styrene and isoprene with styrene at the end of each branch, is a product from ExxonMobil Chemical Company. It has around 30% styrene, 24% styrene-isoprene diblock, and has melt flow index around 8-14 grams per 10 minutes.

Stereon® 842A, a thermoplastic elastomer which is a butadiene-styrene multi-block copolymers, was obtained from Firestone Polymer. It has about 44% styrene and a melt flow index of 8-15 grams per 10 minutes.

Eastotac® H100R is a hydrogenated C5/C9 aliphatic hydrocarbon mid-block tackifying resin which has a Ring and Ball softening point of 95°C to 105°C and is available from Eastman Chemical Company. Kristalex® 3085, 3100, and 5140 are aromatic hydrocarbon resins which have Ring and Ball softening points of 82°C to 88°C, 97°C to 103°C, and 137°C to 143°C, respectively. These are all available from Eastman Chemical Company and function as end-block tackifying resins.

Surlyn® 9970 is an ethylene-acrylic acid copolymer-based ionomer that is at least partially neutralized by $Zn^{++}$, and Surlyn® 8670 is an ethylene-acrylic acid copolymer-based ionomer that is at least partially neutralized by $Na^+$. Both are available from E.I. duPont de Nemours and Company. Kaydol® USP is a white mineral oil available from Crompton Corporation. IRGANOX® 1010FF is an antioxidant available from Ciba-Geigy.

Substrates Used

The non-woven substrate used in the examples was a 16.5 g/m$^2$ (gsm) spunbond polypropylene manufactured by Avgol.

The polyethylene film used in the examples was a corona treated TXEM-244.0 embossed film with thickness of 0.75mil. The film is made by Pliant Corp.

Unless otherwise noted, the segmented polyurethaneurea used to make the spandex and the films in the examples was prepared by reacting 1800 number-average molecular weight poly(tetramethylene ether) glycol with 1-isocyanato-4-[(4-isocyanatophenyl)methyl]benzene (capping ratio 1.67, 2.55 percent NCO), dissolving the resulting capped glycol in dimethylacetamide, chain-extending it with a 90/10 molar ratio of ethylene diamine/2-methyl-1,5-pentanediamine, and diluting the resulting polymer solution with additional dimethylacetamide. During chain extension, small amounts of diethylamine and diethylenetriamine were added to control molecular weight and solution viscosity. A slurry in dimethylacetamide of 1.5 wt% of 2,4,6-tris(2,6-dimethyl-4-t-butyl-3-hydroxybenzyl)isocyanurate (Cyanox® 1790, a registered trademark of Cytec Industries), 0.5 wt% of a polymer of bis(4-isocyanatocyclohexyl)methane) and 3-t-butyl-3-aza-1,5-pentanediol (Methacrol® 2462B, a registered trademark of E. I. du Pont de Nemours and Company), 0.6 wt% of a mixture of 96% poly(dimethylsiloxane) and 4% poly(diamylsiloxane) having a viscosity of about 10 centistokes, 4 wt% of a mixture of huntite and hydromagnesite, 0.3 wt% of titanium dioxide, and various amounts (according to the purpose of the test) of adhesion-promoting additive was prepared and added to the polymer solution to form a spinning solution. The foregoing references to "wt%" are based on the weight of the spandex. The solution was dry-spun into a nitrogen-filled, heated spinning column, coalesced into a spandex multifilament of 560 denier (622 decitex), and wound up without addition of lubricating finish.

Lycra® Type 262 spandex is available from Invista, Inc. "PE010K" refers to a poly(ethylene oxide) having an number average molecular weight of about 10,000, which is available from Aldrich Chemical Company.

Contact angle of substrates was measured with the use of a goniometer, which had a microsyringe for dispensing accurate droplet sizes and a camera for photographing the angle of the probe liquid drop as it met the surface of the adhesive. The contact angle was measured as the angle between the adhesive and the tangent of the probe liquid drop (at the interface). The probe solvents used were water, ethylene glycol, and diiodomethane. The contact angles recorded were the ones at 10 seconds after the probe liquid was applied. The equipment to measure the contact angles was Thwing-Albert's Dynamic Absorption and Contact Angle Tester, which has timing accuracy of 0.001 sec. The standard derivations of 8 measurements for each film with each probe solvent were generally less than 1 degree.

Creep Performance was evaluated by measuring how much a free-end elastic strand retracts under the stretched condition at end-use temperature (100°F (38 °C)) during a 4-hour period.

The length of a filament (spandex) adhered with "unwrapped" adhesive in the stretched condition between two nonwoven sheets or a nonwoven sheet and a polymeric film was measured ("starting length"). "Unwrapped" means that the spandex was in contact with the nonwoven or the polyethylene film when the adhesive was applied, so that the adhesive did not 'wrap' around the spandex. Both ends of the spandex were cut and the amount that the resulting free-end filament retracts was measured following a 4 hour period at 100°F (38 °C). The percent creep was then calculated in the following manner:

$$\% \text{ creep} = \frac{\text{starting length } - \text{ final length}}{\text{starting length}} \times 100$$

For example, if the initial distance between marks was 20cm and the final distance between the marks was 15 cm, the percent creep is 25%. Five samples for each condition were tested and the results averaged for each elastic strand and result recorded.

Surface tension. A simple model proposed by Schultz, J., Tsutsumis, K., and Donnet, J.B., (1977), J. Colloid Interf. Sci., 59, 277, was used to quantify the surface tension. Using this model, surface tension is generally expressed by two terms, a dispersion component $\gamma^D$ and a polar component $\gamma^P$.

$$\gamma = \gamma^D + \gamma^P$$

The surface tension is correlated with contact angle by:

$$1 + \cos\theta = 2\frac{\left(\gamma^D \gamma^D_{Probe}\right)^{1/2} + \left(\gamma^P \gamma^P_{Probe}\right)^{1/2}}{\gamma_{Probe}}$$

wherein $\gamma_{Probe}$'s are surface tensions of probe solvents and can be obtained from various sources (Kinloch, A.J., (1987), Adhesion and Adhesives, Science and Technology, Chapman and Hall, London).

Example 1

Contact angles of films of segmented polyurethanes containing different adhesion promoting additives were determined by measurement and surface tensions calculated. Results are shown in Table 1.

Table 1

| Additives | Contact Angle (water) | Contact Angle (Diiodomethane) | Contact Angle (Ethylene glycol) | Surface Tension $\gamma^D$ | Surface Tension $\gamma^P$ |
|---|---|---|---|---|---|
| None | 77.9 | 27.5 | 52.7 | 44.9 | 4.6 |
| PEO10K (1wt%) | 72.1 | 24.9 | 51.6 | 45 | 5.3 |
| Isocryl® C72 (1wt%) | 76.0 | 24.7 | 50.9 | 46.1 | 5.1 |

These data show that the additives increase both the dispersion and polar components of the surface tension of polyurethane films, indicating improved adhesion with the adhesive.

Example 2

Styrene-isoprene-styrene block-copolymer based adhesives shown in Table 2 were used to make an elastic bond with unwrapped spiral application to samples of the polyethylene film, the nonwoven, and three filaments of spandex.

Table 2

|  | Adhesive 1, parts |
|---|---|
| Vector® DPX 552 | 18.5 |
| Kristalex® 3100 | 10.4 |
| Eastotac® H100 | 52.9 |
| Kaydol® USP | 16.2 |
| Surlyn® 9970 | 2 |

(continued)

|  | Adhesive 1, parts |
|---|---|
| Irganox® 1010 | 0.5 |

Referring to Table 3, spandex Comparison Sample 1 was 620 dtex Lycra® Type 262 spandex containing no adhesion promoting additive. Spandex Samples 1 and 2 were prepared as disclosed elsewhere herein and contained the adhesion promoting additive indicated. Adhesive 1, which contained an ionomer resin, was applied at 270°F. The adhesive add-on was 8mg/in of fiber. The draft of the fiber was 4.0. Creep percentage results are shown in Table 3.

Table 3

| Comparison | Sample 1 | Sample 2 |
|---|---|---|
| Sample 1 (no additive) | (2 wt% PEO10K) | (2 wt% Isocryl® C72) |
| 20% | 15% | 12% |

The data in Table 3 show the improved creep performance of spandex containing poly(ethylene oxide) or an acid-functional copolymer of acrylic acid when an ionomer-containing adhesive is used.

Example 3

Styrene-isoprene-styrene block-copolymer based adhesives shown in Table 4 were used to make an elastic bond with unwrapped spiral application to samples of the polyethylene film, the nonwoven, and three spandex filaments. The adhesive was applied at an application temperature of 270°F (132 °C). Creep performance results are presented in Table 5.

Table 4

|  | Adhesive 2, parts | Adhesive 3 , parts |
|---|---|---|
| Vector® 4211 | 13.6 | 18 |
| Surlyn® 8670 | 3.4 | 0 |
| Surlyn® 9970 | 0 | 1 |
| Kristalex® 3085 | 8.5 | 8 |
| Eastotac® H100R | 59.2 | 55.9 |
| Kaydol® USP | 15.3 | 17.1 |

Comparison Sample 2 was 620 dtex Lycra® Type 262 spandex containing no adhesion promoting additive. Spandex Samples 3 and 4 were prepared as described elsewhere herein and contained the adhesion promoting additives indicated.

Table 5

|  | Comparison Sample 2 (no additive) | Sample 3 (2 wt% PEO10K) | Sample 4 (2 wt% Isocryl® C72) |
|---|---|---|---|
| Adhesive 2 creep, % | 25 | 21 | 23 |
| Adhesive 3 creep, % | 33 | 26 | 22 |

The data in Table 5 illustrate the improvement in creep performance obtained when an adhesion-enhancing additive is used in making the spandex, especially when the hot-melt adhesive comprises an ionomer resin that is at least partially neutralized with a polyvalent cation such as $Zn^{++}$.

Example 4

Table 6

|  | Adhesive 4, parts |
|---|---|
| Vector® 4411 1 | 16.3 |
| Stereon® 842A | 7.1 |
| Kristalex® 3100 | 8.2 |
| Kristalex® 5140 | 2.0 |
| Eastotac® H100 | 49 |
| Kaydol® USP | 17.3 |
| Irganox® 1010 | 0.5 |

Hot-melt Adhesive 4 was applied at 310°F to make an elastic bond using an unwrapped spiral application to samples of three spandex filaments, the spunbonded nonwoven, and the polyethylene film. Referring to Table 7, spandex Comparison Sample 3 was prepared as described elsewhere herein and contained no adhesion-promoting additive. Spandex Samples 4 through 11 contained the adhesion promoting additives indicated.

Table 7

|  | Additive | Creep% |
|---|---|---|
| Comparison Sample 3 | None | 16 |
| Sample 4 | 1 wt% PEO 10K | 16 |
| Sample 5 | 2 wt% PEO 10K | 15 |
| Sample 6 | 3 wt% PEO 10K | 14 |
| Sample 7 | 1 wt% Isocryl® C72 | 18 |
| Sample 8 | 2 wt% Isocryl® C72 | 11 (average of two spins) |
| Sample 9 | 3 wt% Isocryl® C72 | 14 |
| Sample 10 | 2 wt% Elvacite® 2669 | 12 |
| Sample 11 | 2 wt% Epomatt G152 | 16 |

The data in Table 7 show that about 3wt% to 5wt% of a polyether and about 1.5wt% to 4wt% (preferably about 2wt% to 3wt%) of certain carboxylic acid-functional copolymers (preferred) are effective at improving adhesion when they are present in the substrate spandex.

**Claims**

1.  A method of enhancing the adhesion of an adhesive to a polymeric substrate comprising incorporating into the Polymeric substrate an adhesion-enhancing amount of an additive selected from the group consisting of polyethylene oxide, polypropylene oxide, poly(trimethylene oxide), poly(tetramethylene oxide), poly(tetrahydrofuran), polyphenylene oxide and mixtures thereof.

2.  The method of claim 1 wherein the additive is incorporated at about 1.5 to about 4 wt%, based on the weight of the substrate.

3.  The method of claim 1 wherein the polymeric substrate is adhered to a second substrate comprising a material selected from the group consisting of polymeric, paper or paperboard, a nonwoven, wood or wood composite, and cloth,

4.  The method of claim 1, wherein the polymeric substrate is spandex.

**5.** The method of claim 2 wherein the additive is incorporated at about 2 to about 3 wt%.

**6.** The method of claim 1, wherein the adhesive is a hot melt adhesive.

**7.** The method of claim 6, wherein the polymeric substrate is spandex and the hot melt adhesive comprises a thermoplastic elastomer, a tackifying resin, and an ionomer resin.

**8.** A polymeric substrate with improved adhesion to another polymeric substrate or to a paper, paperboard, nonwoven, wood, wood composite or cloth substrate, comprising an adhesion enhancing amount of at least one additive Incorporated into the polymeric substrate, wherein the additive is selected from the group consisting of polyethylene oxide, polypropylene oxide, poly(trimethylene oxide), poly(tetramethylene oxide), Poly(tetrahydrofuran), polyphenylene oxide and mixtures thereof.

**9.** The polymeric substrate of claim 8 wherein the substrate is spandex.

**10.** The polymeric substrate of claim 8 wherein the polymeric substrate adheres to another substrate with a creep percent of at least about 10% lower than a creep percent for a control substrate without an adhesion-enhancing additive when the adhesive is a hot melt adhesive comprising a thermoplastic elastomer, a tackifying resin, and an tonomer resin.

**11.** A process for bonding a first substrate to a second substrate, comprising applying to at least the first substrate an adhesive, bringing at least the second substrate, which Is the same or different from the first substrate, In contact with the adhesive present on the first substrate whereby said first and second substrates are bonded together, wherein at least one of said first and said second substrates is a polymeric substrate that incorporates an adhesion enhancing amount of an additive selected from the group consisting of polyethylene oxide, polypropylene oxide, poly(trimethylene oxide), poly(tetramethylene oxide), poly(tetrahydrofuran), polyphenylene oxide and mixtures thereof.

**12.** The process of claim 11 wherein the first-substrate is polymeric, and the second substrate is polymeric, paper or paperboard, a nonwoven, wood or wood composite, or cloth.

**13.** The process of claim 11 wherein at least one of the first and second substrates is spandex

**14.** The process of claim 11 wherein the adhesive is a hot melt adhesive comprising a thermoplastic elastomer, a tackifying resin, and an tonomer resin.

**15.** An article of manufacture comprising an adhesive and a polymeric substrate bonded to another substrate with said adhesive, wherein the polymeric substrate incorporates an adhesion-enhancing amount of at least one additive selected from the group consisting of polyethylene oxide, polypropylene oxide, poty(trimethylene oxide), poly(tetramethylene oxide), poly(tetrohydrofuran), polyphenylene oxide and mixtures thereof.

**16.** The article of claim 15 which is a disposable absorbent article.

**17.** The article of claim 15 wherein the polymeric substrate comprises spandex.

**18.** The article of claim 17 wherein the wherein the adhesive is a hot melt adhesive comprising a thermoplastic elastomer, a tackifying resin and an ionomer resin.

**Patentansprüche**

**1.** Verfahren zur Vermittlung der Haftung eines Klebstoffs an einem Polymersubstrat, umfassend die Inkorporation in das Polymersubstrat einer haftvermittelnden Menge eines Additivs, das aus der Gruppe ausgewählt ist, bestehend aus Polyethylenoxid, Polypropylenoxid, Poly(trimethylenoxid), Poly(tetramethylenoxid), Poly(tetrahydrofuran), Polyphenylenoxid und Gemischen davon.

**2.** Verfahren nach Anspruch 1, worin das Additiv zu ca. 1,5 bis ca. 4 Gew.-% bezogen auf das Gewicht des Substrats inkorporiert wird.

**3.** Verfahren nach Anspruch 1, worin das Polymersubstrat an ein zweites Substrat geklebt wird, umfassend ein Material, das aus der Gruppe ausgewählt ist, bestehend aus Polymer, Papier oder Pappe, einem Vlies (Nonwoven), Holz oder Holzverbundstoff und textilem Flächengebilde.

**4.** Verfahren nach Anspruch 1, worin das Polymersubstrat Elastan (Spandex) darstellt.

**5.** Verfahren nach Anspruch 2, worin das Additiv zu ca. 2 bis ca. 3 Gew.-% inkorporiert wird.

**6.** Verfahren nach Anspruch 1, worin der Klebstoff einen Heißsclunelzklebstoff darstellt.

**7.** Verfahren nach Anspruch 6, worin das Polymersubstrat Elastan darstellt und der Heißschmelzklebstoff ein thermoplastisches Elastomer, ein Klebrigmacherharz und ein Ionomerharz darstellt.

**8.** Polymersubstrat mit verbesserter Haftung an einem anderen Polymersubstrat oder an einem Papier-, Papp-, Vlies-, Holz-, Holzverbundstoffsubstrat oder einem Substrat aus einem textilen Flächengebilde, umfassend eine haftvermittelnde Menge von mindestens einem Additiv, das in das Polymersubstrat inkorporiert wird, worin das Additiv aus der Gruppe ausgewählt ist, bestehend aus Polyethylenoxid, Polypropylenoxid, Poly(trimethylenoxid), Poly(tetramethylenoxid), Poly(tetrahydrofuran), Polyphenylenoxid und Gemischen davon.

**9.** Polymersubstrat nach Anspruch 8, worin das Substrat Elastan darstellt.

**10.** Polymersubstrat nach Anspruch 8, worin das Polymersubstrat an einem anderen Substrat mit einem prozentualen Kriechvermögen haftet, das mindestens ca. 10 % niedriger als ein prozentuales Kriechvermögen für ein Kontrollsubstrat ohne ein haftvermittelndes Additiv liegt, wenn der Klebstoff einen Heißschmelzklebstoff, umfassend ein thermoplastisches Elastomer, ein Klebrigmacherharz und ein Ionomerharz, darstellt.

**11.** Verfahren zum Verbinden eines ersten Substrats mit einem zweiten Substrat, umfassend das Aufbringen eines Klebstoffs auf mindestens das erste Substrat und das Inkontaktbringen von mindestens dem zweiten Substrat, bei dem es sich um das gleiche oder ein vom ersten unterschiedliches Substrat handelt, mit dem auf dem ersten Substrat vorhandenen Klebstoff, wobei die ersten und zweiten Substrate miteinander verbunden werden, worin mindestens eines von den ersten und zweiten Substraten ein Polymersubstrat darstellt, das eine haftvermittelnde Menge eines Additivs, ausgewählt aus der Gruppe, bestehend aus Polyethylenoxid, Polypropylenoxid, Poly(trimethylenoxid), Poly(tetramethylenoxid), Poly(tetrahydrofuran), Polyphenylenoxid und Gemischen davon, inkorporiert.

**12.** Verfahren nach Anspruch 11, worin das erste Substrat ein Polymer darstellt und das zweite Substrat Polymer, Papier oder Pappe, ein Nonwoven, Holz oder Holzverbundstoff oder ein textiles Flächengebilde darstellt.

**13.** Verfahren nach Anspruch 11, worin mindestens eines von den ersten und zweiten Substraten Elastan darstellt.

**14.** Verfahren nach Anspruch 11, worin der Klebstoff einen Heißschmelzklebstoff darstellt, umfassend ein thermoplastisches Elastomer, ein Klebrigmacherharz und ein Ionomerharz.

**15.** Herstellungsartikel, umfassend einen Klebstoff und ein Polymersubstrat, das mit dem Klebstoff mit einem anderen Substrat verbunden wird, worin das Polymersubstrat eine haftvermittelnde Menge von mindestens einem Additiv, ausgewählt aus der Gruppe, bestehend aus Polyethylenoxid, Polypropylenoxid, Poly(trimethylenoxid), Poly(tetramethylenoxid), Poly(tetrahydrofuran), Polyphenylenoxid und Gemischen davon, inkorporiert.

**16.** Artikel nach Anspruch 15, bei dem es sich um einen saugfähigen Einwegartikel handelt.

**17.** Artikel nach Anspruch 15, worin das Polymersubstrat Elastan umfasst.

**18.** Artikel nach Anspruch 17, worin der Klebstoff einen Heißschmelzklebstoff, umfassend ein thermoplastisches Elastomer, ein Klebrigmacherharz und ein Ionomerharz, darstellt.

**Revendications**

**1.** Procédé d'amélioration de l'adhésion d'un adhésif à un substrat polymère comprenant l'incorporation dans le substrat polymère d'une quantité améliorant l'adhésion d'un additif choisi parmi le groupe constitué du poly(oxyde d'éthylène), du poly(oxyde de propylène), du poly(oxyde de triméthylène), du poly(oxyde de tétraméthylène), du polytétrahydrofurane, du poly(oxyde de phénylène) et des mélanges de ceux-ci.

2. Procédé selon la revendication 1, dans lequel l'additif est incorporé à environ 1,5 à environ 4 % en pds sur la base du poids du substrat.

3. Procédé selon la revendication 1, dans lequel le substrat polymère adhère à un second substrat comprenant un matériau choisi parmi le groupe constitué de substrat polymère, de papier ou de carton, d'un non-tissé, de bois ou de composite ligneux, et de tissu.

4. Procédé selon la revendication 1, dans lequel le substrat polymère est du spandex.

5. Procédé selon la revendication 2, dans lequel l'additif est incorporé à environ 2 à environ 3 % en pds.

6. Procédé selon la revendication 1, dans lequel l'adhésif est un adhésif thermofusible.

7. Procédé selon la revendication 6, dans lequel le substrat polymère est du spandex et l'adhésif thermofusible comprend un élastomère thermoplastique, une résine donnant du collant, et une résine ionomère.

8. Substrat polymère avec adhésion améliorée à un autre substrat polymère ou à un substrat en papier, en carton, en non-tissé, en bois, en composite ligneux ou en tissu, comprenant une quantité améliorant l'adhésion d'au moins un additif incorporé dans le substrat polymère, dans lequel l'additif est choisi parmi le groupe constitué du poly(oxyde d'éthylène), du poly(oxyde de propylène), du poly(oxyde de triméthylène), du poly(oxyde de tétraméthylène), du polytétrahydrofurane, du poly(oxyde de phénylène) et des mélanges de ceux-ci.

9. Substrat polymère selon la revendication 8, dans lequel le substrat est du spandex.

10. Substrat polymère selon la revendication 8, dans lequel le substrat polymère adhère à un autre substrat avec un pourcentage de fluage inférieur d'au moins environ 10 % à un pourcentage de fluage pour un substrat témoin sans additif améliorant l'adhésion lorsque l'adhésif est un adhésif thermofusible comprenant un élastomère thermoplastique, une résine donnant du collant, et une résine ionomère.

11. Procédé de liaison d'un premier substrat à un second substrat, comprenant l'application au moins au premier substrat d'un adhésif, la mise en contact d'au moins le second substrat, qui est identique ou différent du premier substrat, avec l'adhésif présent sur le premier substrat moyennant quoi lesdits premier et second substrats sont liés ensemble, dans lequel au moins l'un desdits premiers et desdits seconds substrats est un substrat polymère qui incorpore une quantité améliorant l'adhésion d'un additif choisi parmi le groupe constitué du poly(oxyde d'éthylène), du poly(oxyde de propylène), du poly(oxyde de triméthylène), du poly(oxyde de tétraméthylène), du polytétrahydrofurane, du poly(oxyde de phénylène) et des mélanges de ceux-ci.

12. Procédé selon la revendication 11, dans lequel le premier substrat est polymère, et le second substrat est polymère, du papier ou du carton, un non-tissé, du bois ou un composite ligneux, ou du tissu.

13. Procédé selon la revendication 11, dans lequel au moins l'un des premier et second substrats est du spandex.

14. Procédé selon la revendication 11, dans lequel l'adhésif est un adhésif thermofusible comprenant un élastomère thermoplastique, une résine donnant du collant, et une résine ionomère.

15. Article de manufacture, comprenant un adhésif et un substrat polymère lié à un autre substrat avec ledit adhésif, dans lequel le substrat polymère incorpore une quantité améliorant l'adhésion d'au moins un additif choisi parmi le groupe constitué du poly(oxyde d'éthylène), du poly(oxyde de propylène), du poly(oxyde de triméthylène), du poly(oxyde de tétraméthylène), du polytétrahydrofurane, du poly(oxyde de phénylène) et des mélanges de ceux-ci.

16. Article selon la revendication 15, qui est un article absorbant jetable.

17. Article selon la revendication 15, dans lequel le substrat polymère comprend du spandex.

**18.** Article selon la revendication 17, dans lequel l'adhésif est un adhésif thermofusible comprenant un élastomère thermoplastique, une résine donnant du collant et une résine ionomère.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3468975 A
- US 4230838 A
- US 3239478 A
- US 3427269 A
- US 3700633 A
- US 3753936 A
- US 3932327 A
- US 4526577 A
- US 4944993 A
- US 5603948 A

**Non-patent literature cited in the description**

- **SCHULTZ, J ; TSUTSUMIS, K ; DONNET, J.B.** *J. Colloid Interf. Sci.,* 1977, vol. 59, 277
- **KINLOCH, A.J.** Adhesion and Adhesives, Science and Technology. Chapman and Hall, 1987